# EUROPEAN PATENT SPECIFICATION

(11) **EP 1 500 532 B1**
(45) Date of publication and mention of the grant of the patent: **29.10.2008**
(21) Application number: 03102306.2
(22) Date of filing: 25.07.2003
(51) Int. Cl.: B60H 1/00

(54) **Air conditioning module**
Klimatisierungsmodul
Module de traitement d'air

(43) Date of publication of application: 26.01.2005
(73) Proprietor: Delphi Technologies, Inc., Troy, MI 48007 (US)
(72) Inventor: Petesch, Jean-Claude, 8283, Kehlen (LU)
(74) Representative: Robert, Vincent

(56) References cited:
- EP-A- 0 768 198
- DE-A- 10 044 433
- DE-A- 19 915 966
- FR-A- 2 783 755
- PATENT ABSTRACTS OF JAPAN vol. 014, no. 247 (M-0978), 25 May 1990 (1990-05-25) & JP 02 068213 A (NIPPON DENSO CO LTD), 7 March 1990 (1990-03-07)

## Description

### Introduction

The present invention generally relates to an air conditioning module and in particular to an HVAC module for automotive applications.

### Object of the invention

One of the problems in current air conditioning modules, in particular in automotive air conditioning modules using toxic or inflammable refrigerant, is the leaking of such refrigerant into the passenger compartment or the cabin of a vehicle.

According to Japanese Unexamined Patent Application (Kokai) No. 9-11734 the above problem is dealt with by providing a sensor for detecting the leaking of refrigerant into the passenger compartment or into the cabin of the vehicle, the sensor being adapted, upon detection of the leaking, to actuate a servo motor to open an external air inlet to introduce air from the outside of the passenger compartment thereby to prevent the undesired leaking of refrigerant from flowing into the passenger compartment.

In addition, US-B2-6 370 898 provides for alternative means for preventing the leaking of refrigerant into the passenger compartment when the engine is switched off, and thus both the servo motor and the sensor (along with the air conditioning system of the vehicle) are not powered. In particular, according to US-B2-6 370 898 the path of refrigerant into the passenger compartment through a windscreen port is designed so as to have a higher air resistance than the path of refrigerant to the outside of the passenger compartment via an outside air port. Therefore, upon closing the air conditioning system and of all ports, except for the windscreen port and the outside air port, leaking refrigerant will automatically flow through the path of lower air resistance via the outside air port.

Nevertheless, in the known system of US-B2-6 370 898, air conditioning refrigerant may still leak into the passenger compartment if the outside air port is blocked for some reason or if the air resistance of the path extending therethrough is increased due to depositions.

Yet another approach for preventing the leaking of refrigerant into the passenger compartment when the air conditioning is switched off is described in US-A-5 918 475. According to the known system of US-A-5 918 475 respective valves are provided in the refrigeration circuit, upstream and downstream of the evaporator, such that when the air conditioning system is switched off the valves are closed to limit the amount of refrigerant leaking from the evaporator.

A similar arrangement to that of US-A-5 918 475 is taught by DE-C1-44 26 339, wherein respective check valves are provided in the refrigeration circuit, upstream and downstream of the evaporator. Again both valves can be closed simultaneously to limit the amount of refrigerant leaking from the evaporator.

The respective arrangements of DE-C1-44 26 339 and US-A-5 918 475 are not free of drawbacks, inasmuch as the additional valves increase the overall cost of the air conditioning systems. In addition, the weight of the air conditioning system is also increased.

JP 02 068 213 discloses an air conditioning module of an air conditioning system, the module comprising a closing element arranged in an inlet passage between the inlet port and the evaporator, and a control means operatively coupled to the closing element, the control means being adapted to close the outlet ports and the inlet passage, such that the air conditioning module is closed upstream and downstream of the evaporator and air is forced out of the module via a purge opening. This air conditioning module is designed to remove foreign matters attached to the front side of the evaporator by reversing the flow of air and directing the foreign matter with the air out of the module via the purge opening.

FR 2 783 755 discloses an air conditioning module comprising a closing element between the blower and the distribution chamber.

In view of the foregoing, it is an object of the present invention to provide for a safe, low cost solution for limiting or avoiding refrigerant from an air conditioning system leaking into the passenger compartment, especially when the air conditioning system is switched off.

### General description of the invention

The above object and further objects, which will become apparent hereinafter, are achieved by an air conditioning module of an air conditioning system, the module comprising an evaporator arranged therein; an inlet port arranged upstream of the evaporator; at least one outlet port arranged downstream of the evaporator; a closing element arranged in an inlet passage between the inlet port and the evaporator; and a control means operatively coupled to the at least one outlet port and the closing element, wherein the control means is adapted to close the at least one outlet port and the inlet passage, such that the air conditioning module is closed upstream and downstream of the evaporator. According, to an important aspect of the invention, the control means is adapted to close the at least one outlet port and the inlet passage upon switching off the air conditioning system and/or upon detecting a leak in the refrigeration circuit.

By closing the air conditioning module upstream and downstream of the evaporator, refrigerant is e.g. prevented from penetrating a passenger compartment of a vehicle via any of the outlet ports of the module. Refrigerant is also prevented from escaping into the atmosphere and penetrating the passenger compartment via the inlet port. Any refrigerant leaking from the evaporator is contained in the air conditioning module. The part of the air conditioning module housing the evaporator is hence completely isolated from the passenger compartment.

The at least one outlet port can be a windscreen outlet port, a face outlet port, and/or a feet outlet port. The at least one outlet port e.g. opens towards a passenger compartment of a vehicle.

In addition, according to the invention, the module can be provided with a drain port communicating e.g. with the outside of the vehicle for draining leaked refrigerant from the module in the above described separated state.

In the air conditioning module according to the present invention the control means may be further adapted to vary the degree of opening of the closing element. This allows using the closing element for ram air compensation and/or air separation in a vehicle with a dual air system. There is hence no need to provide a further element for the ram air compensation or the air separation. Weight and costs of the air conditioning system can hence be reduced.

Preferably, the closing element is embodied in the form of a butterfly valve or a clapper valve.

The present air conditioning module may comprise an air inlet valve arranged upstream of the inlet port of the module, the air inlet valve being actuatable so as to bring the inlet port in communication with a fresh air port connected to outside air and/or a recirculation air port connected to inside air, e.g. air in a passenger compartment of a vehicle. In a first end position of the air inlet valve, the inlet port can be in communication with the recirculation air port and the fresh air port can be sealed off. In a second end position of the air inlet valve, the inlet port can be in communication with the fresh air port and the recirculation air port can be sealed off. In an intermediate position between the first end position and the second end position, the inlet port can be in communication both with the recirculation air port and the fresh air port.

In the first and second end positions, the air inlet valve allows to feed either fresh air or recirculation air to the air conditioning module. In the intermediate position, this arrangement allows fresh air to enter the passenger compartment even when the air conditioning module is closed off.

The position of the air inlet valve is preferably variable around the intermediate position, so as to allow the ratio of fresh air and recirculated air to be changed.

### Detailed description with respect to the figures

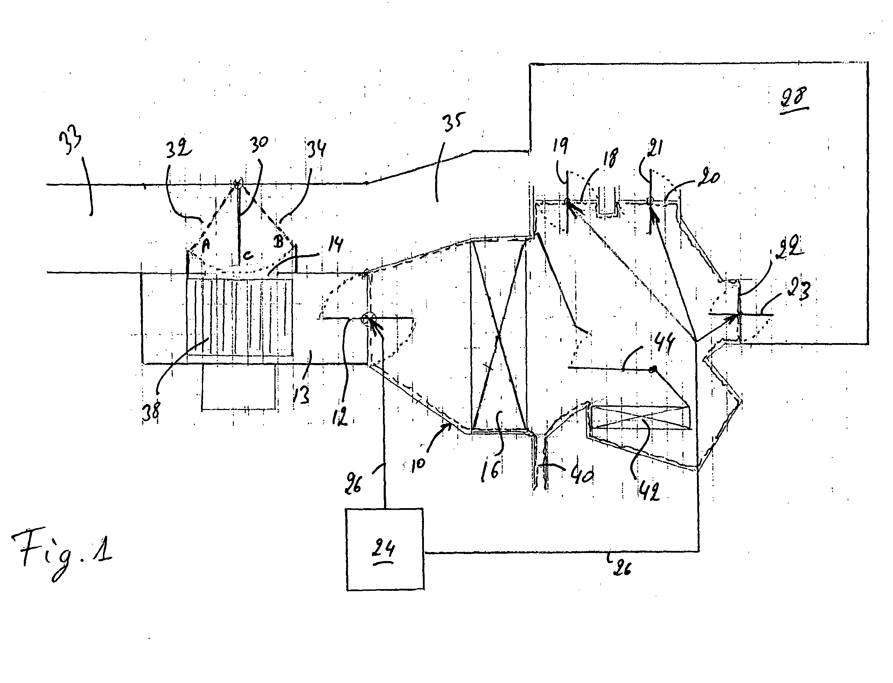

The invention is herein described, by way of example only, with reference to the only accompanying figure, namely Fig.1, which shows a schematic view of a currently preferred embodiment of an air conditioning module according to the present invention.

With reference to the non-limitative example of Fig.1 there is shown an air conditioning module, in particular an HVAC (heating, ventilating & air conditioning) module, designated in general with reference numeral 10. The HVAC module 10 is provided with a closing element 12 arranged in an inlet passage 13 between an inlet port 14 of the HVAC module 10 and an evaporator 16 arranged in the module 10, so that the evaporator 16 can be completely enclosed by the HVAC module 10 as will be explained hereinafter. The closing element 12 may be embodied in the form of a butterfly or a clapper valve.

The HVAC module 10 is further provided, as well known in the art, with a windscreen outlet port 18, a face outlet port 20 and a feet outlet port 22. The windscreen outlet port 18, face outlet port 20 and feet outlet port 22 are preferably controlled by a single controller 24 via a common control line 26 such that according to the invention, upon switching off the air conditioning system, the HVAC module 10 along with the evaporator 16 enclosed therein is separated from a passenger compartment 28 by simultaneously closing the windscreen outlet port 18, face outlet port 20 and feet outlet port 22 by means of respective valves or flaps 19, 21, 23. Therefore, refrigerant leaking from the evaporator 16 to the passenger compartment 28 via the ports 18, 20 and 22 will be prevented. Clearly, if further ports are provided in the HVAC module 10 at the downstream side of the evaporator 16 they will be closed in a similar manner as described above.

Furthermore, the closing element 12 is also controlled via the same control line 26 by the controller 24, such that a complete closure of the evaporator 16 both at the downstream and upstream side thereof by closing the windscreen outlet port 18, the face outlet port 20, the feet outlet port 22, and the closing element 12 can be provided upon switching off the air conditioning system.

An air inlet valve 30 is provided upstream of the inlet port 14 and is actuatable so as to bring the inlet port 14 in communication with a fresh air port 32 connected to outside air via a fresh air passage 33 and/or a recirculation air port 34 connected to the passenger compartment 28 via a recirculation air passage 35.

In a first end position A of the air inlet valve 30, the inlet port 14 can be in communication with the recirculation air port 34 and the fresh air port 32 can be sealed off. In a second end position B of the air inlet valve 30, the inlet port 14 can be in communication with the fresh air port 32 and the recirculation air port 34 can be sealed off. In an intermediate position C between the first end position A and the second end position B, the inlet port 14 can be in communication both with the recirculation air port 34 and the fresh air port 32. In the first and second end positions A, B, the air inlet valve 30 allows to feed either fresh air or recirculation air to the air conditioning module 10. While the air inlet valve 30 can be, as shown in Fig.1, in an intermediate position C wherein the ratio of fresh air to recirculated air is substantially equal, it is conceivable to provide for varying ratios of fresh air and recirculated air by moving the air inlet valve 30 towards either of the ports 32 or 34.

In the intermediate position C, fresh air can enter the passenger compartment 28 even when the air conditioning module 10 is closed off. The closing element 12 allows the complete isolation of the part of the air conditioning module 10 housing the evaporator 16 from the passenger compartment 28, especially upon switching off the air conditioning system, as described above.

With continuing reference to Fig.1 the present HVAC module 10 may further include a blower 38 between the inlet port 14 and the evaporator 16. Although in the currently envisaged embodiment the closing element 12 is provided downstream of the blower 38, it is also possible to arrange such closing element 12 in a position upstream of the blower 38.

According to a further advantageous aspect of the present module there is provided a drain port 40 communicating with the outside of the passenger compartment 28 for draining leaked refrigerant from the HVAC module 10. Alternatively, the existing condensate drain port can be used for draining leaked refrigerant from the HVAC module 10.

The closing element 12, if controlled appropriately depending on vehicle speed, can also be used for ram air compensation when the engine of the vehicle is running and the HVAC is in use. The speed dependent compensation for ram air is achieved by varying the position of the closing element 12 as shown by the dotted line in Fig.1. The latter feature of the present invention eliminates the need for an additional ram air compensation element.

Yet another advantageous function of the closing element 12 is that of separation between the left/right part of the passenger compartment 28 in vehicles with dual air systems. By appropriately controlling the closing element 12 in accordance with the individual settings in a vehicle with dual air system it is possible to direct more air into one side (left/right) of the passenger compartment 28. Again, the above feature of the present invention eliminates the need for an additional air direction element.

Both for the ram air compensation and air separation functions control can be achieved by a controller (for instance controller 24), which is provided with the necessary sensor signals and programmed to function in accordance therewith as well known to the person skilled in the art. The control signal can be provided to the closing element 12 via a dedicated line (not shown) or over the common control line 26 by modulating the control signal such as to avoid interference with other control signal on this line 26.

Furthermore, conventional detector means (not shown) may be provided for detecting a leak in the evaporator 16 when the air conditioning system is operating. Such detector means can e.g. be located within the HVAC module 10, downstream of the evaporator. The detector means may be connected for instance to the controller 24 such as to close the windscreen outlet port 18, the face outlet port 20, the feet outlet port 22 and the closing element 12 simultaneously upon detecting a refrigerant leak. Also the present system may be provided with detector means (not shown) in the refrigerant circuit to detect leak in the refrigeration circuit directly. Such detector means can e.g. be a pressure detector for detecting a pressure difference of the refrigerant in the refrigerant circuit.

It will further be appreciated that the HVAC module 10 can further comprise a heater 42 and a mixing door 44 for directing part of the air flow through the heater 42 or for bypassing the heater 42.

The present system is designed with particular regard to CO₂ (toxic) or R152a (inflammable) refrigerants. However, it works and provides for the above advantages also with other refrigerants such as R12, R134a etc.

The present disclosure is to be understood broadly and no limitation with respect to the specific embodiments herein is intended or should be inferred. The disclosure is intended to cover, by the appended claims, all such modifications as falling within the scope of the claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An air conditioning module (10) of an air conditioning system, the module (10) comprising:
an evaporator (16) arranged therein;
an inlet port (14) arranged upstream of the evaporator (16);
at least one outlet port (18, 20, 22) arranged downstream of the evaporator (16);
a closing element (12) arranged in an inlet passage (13) between the inlet port (14) and the evaporator (16),
a control means (24) operatively coupled to the at least one outlet port (18, 20, 22) and the closing element (12), the control means (24) being adapted to close the at least one outlet port (18, 20, 22) and the inlet passage (13), such that the air conditioning module (10) is closed upstream and downstream of the evaporator (16)
**characterised in that**
the control means (24) is adapted to close the at least one outlet port (18, 20, 22) and the inlet passage (13) upon switching off the air conditioning system and/or upon detecting a leak in the refrigeration circuit.

2. The air conditioning module (10) of claim 1, wherein the at least one outlet port (18, 20, 22) comprises a windscreen outlet port (18), a face outlet port (20), and a feet outlet port (22), the at least one outlet port (18, 20, 22) opening towards a passenger compartment (28) of a vehicle.

3. The air conditioning module (10) of one or more of the preceding claims, further comprising a drain port (40) for draining leaked refrigerant from the module (10).

4. The air conditioning module (10) of one or more of the preceding claims, wherein the control means (24) is further adapted to vary the degree of opening of the closing element (12).

5. The air conditioning module (10) of one or more of the preceding claims, wherein the closing element (12) is embodied in the form of a butterfly valve or a clapper valve.

6. The air conditioning module (10) of one or more of the preceding claims, wherein an air inlet valve (30) is arranged upstream of the inlet port (14) of the module (10), the air inlet valve (30) being actuatable so as to bring the inlet port (14) in communication with a fresh air port (32) connected to outside air and/or a recirculation air port (34) connected to inside air; wherein,
- in a first end position (A) of the air inlet valve (30), the inlet port (14) is in communication with the recirculation air port (34) and the fresh air port (32) is sealed off; and
- in a second end position (B) of the air inlet valve (30), the inlet port (14) is in communication with the fresh air port (32) and the recirculation air port (34) is sealed off; and
- in an intermediate position (C) between the first end position (A) and the second end position(B), the inlet port (14) is in communication both with the recirculation air port (34) and the fresh air port (32).

7. The invention according to claim 6, wherein position of the air inlet valve (30) is variable around the intermediate position (C).

## Patentansprüche

1. Klimatisierungsmodul (10) eines Klimatisierungssystems,
wobei das Modul (10) umfasst:
einen Verdampfer (16), der in diesem angeordnet ist;
eine Einlassöffnung (14), die stromaufwärts des Verdampfers (16) angeordnet ist;
zumindest eine Auslassöffnung (18, 20, 22), die stromabwärts des Verdampfers (16) angeordnet ist;
ein Verschlusselement (12), das in einem Einlassdurchgang (13) zwischen der Einlassöffnung (14) und dem Verdampfer (16) angeordnet ist,
ein Steuerungsmittel (24), das mit der zumindest einen Auslassöffnung (18, 20, 22) und dem Verschlusselement (12) wirksam gekoppelt ist, wobei das Steuerungsmittel (24) geeignet ist, die zumindest eine Auslassöffnung (18, 20, 22) und den Einlassdurchgang (13) zu verschließen, so dass das Klimatisierungsmodul (10) stromaufwärts und stromabwärts des Verdampfers (16) verschlossen ist
**dadurch gekennzeichnet, dass**
das Steuerungsmittel (24) geeignet ist, die zumindest eine Auslassöffnung (18, 20, 22) und den Einlassdurchgang (13) zu verschließen, wenn das Klimatisierungssystem ausgeschaltet wird und/oder wenn ein Leck in dem Kühlkreislauf detektiert wird.

2. Klimatisierungsmodul (10) nach Anspruch 1,
wobei die zumindest eine Auslassöffnung (18, 20, 22) eine Windschutzscheiben-Auslassöffnung (18), eine Gesichtsauslassöffnung (20) und eine Fußauslassöffnung (22) umfasst, wobei sich die zumindest eine Auslassöffnung (18, 20, 22) zu einem Fahrgastraum (28) eines Fahrzeuges hin öffnet.

3. Klimatisierungsmodul (10) nach zumindest einem der vorhergehenden Ansprüche,
das ferner eine Ablassöffnung (40) umfasst, um ausgetretenes Kühlmittel aus dem Modul (10) abzulassen.

4. Klimatisierungsmodul (10) nach zumindest einem der vorhergehenden Ansprüche,
wobei das Steuerungsmittel (24) ferner geeignet ist, den Öffnungsgrad des Verschlusselements (12) zu verändern.

5. Klimatisierungsmodul (10) nach zumindest einem der vorhergehenden Ansprüche,
wobei das Verschlusselement (12) in der Form eines Schmetterlingsventils oder eines Scharnierventils ausgeführt ist.

6. Klimatisierungsmodul (10) nach zumindest einem der vorhergehenden Ansprüche,
wobei ein Lufteinlassventil (30) stromaufwärts der Einlassöffnung (14) des Moduls (10) angeordnet ist, wobei das Lufteinlassventil (30) derart betätigbar ist, dass die Einlassöffnung (14) mit einer Frischluftöffnung (32), die mit der Außenluft verbunden ist, und/oder einer Umluftöffnung (34), die mit der Innenluft verbunden ist, in Verbindung gebracht wird;
wobei
- in einer ersten Endposition (A) des Lufteinlassventils (30) die Einlassöffnung (14) mit der Umluftöffnung (34) in Verbindung steht und die Frischluftöffnung (32) abgeriegelt ist; und
- in einer zweiten Endposition (B) des Lufteinlassventils (30) die Einlassöffnung (14) mit der Frischluftöffnung (32) in Verbindung steht und die Umluftöffnung (34) abgeriegelt ist; und
- in einer Zwischenposition (C) zwischen der ersten Endposition (A) und der zweiten Endposition (B) die Einlassöffnung (14) sowohl mit der Umluftöffnung (34) und der Frischluftöffnung (32) in Verbindung steht.

7. Erfindung nach Anspruch 6, wobei die Position des Lufteinlassventils (30) um die Zwischenposition (C) herum variabel ist.

## Revendications

1. Module de conditionnement d'air (10) d'un système de conditionnement d'air, le module (10) comprenant :
un évaporateur (16) agencé à l'intérieur ;
un orifice d'entrée (14) agencé en amont de l'évaporateur (16) ;
au moins un orifice de sortie (18, 20, 22) agencé en aval de l'évaporateur (16) ;
un élément de fermeture (12) agencé dans un passage d'entrée (13) entre l'orifice d'entrée (14) et l'évaporateur (16),
un moyen de commande (24) fonctionnellement couplé audit au moins un orifice de sortie (18, 20, 22) et à l'élément de fermeture (12), le moyen de commande (24) étant adapté à fermer ledit au moins un orifice de sortie (18, 20, 22) et le passage d'entrée (13) de telle façon que le module de conditionnement d'air (10) est fermé en amont et en aval de l'évaporateur (16),
**caractérisé en ce que**
le moyen de commande (24) est adapté à fermer ledit au moins un orifice de sortie (18, 20, 22) et le passage d'entrée (13) lors de la commutation du système de conditionnement d'air et/ou lors de la détection d'une fuite dans le circuit de réfrigération.

2. Module de conditionnement d'air (10) selon la revendication 1, dans lequel ledit au moins un orifice de sortie (18, 20, 22) comprend un orifice de sortie de pare-brise (18), un orifice de sortie facial (20), et un orifice de sortie d'alimentation (20), ledit au moins un orifice de sortie (18, 20, 22) s'ouvrant vers un compartiment passager (28) d'un véhicule.

3. Module de conditionnement d'air (10) selon l'une ou plusieurs des revendications précédentes, comprenant en outre un orifice de drainage (40) pour drainer le réfrigérant qui a fui hors du module (10).

4. Module de conditionnement d'air (10) selon l'une ou plusieurs des revendications précédentes, dans lequel le moyen de commande (24) est en outre adapté à faire varier le degré d'ouverture de l'élément de fermeture (12).

5. Module de conditionnement d'air (10) selon l'une ou plusieurs des revendications précédentes, dans lequel l'élément de fermeture (12) est incorporé sous la forme d'une vanne papillon ou d'une vanne à clapet.

6. Module de conditionnement d'air (10) selon l'une ou plusieurs des revendications précédentes, dans lequel une vanne d'entrée d'air (30) est agencée en amont de l'orifice d'entrée (14) du module (10), la vanne d'entrée d'air (30) pouvant être actionnée de manière à mettre l'orifice d'entrée (14) en communication avec un orifice d'air frais (32) connecté avec l'extérieur et/ou un orifice d'air de recirculation (34) connecté avec l'air intérieur ; dans lequel
- dans une première position finale (A) de la vanne d'entrée d'air (30), l'orifice d'entrée (14) est en communication avec l'orifice d'air de recirculation (34) et l'orifice d'air frais (32) est fermé ; et
- dans une seconde position finale (B) de la vanne d'entrée d'air (30), l'orifice d'entrée (14) est en communication avec l'orifice d'air frais (32) et l'orifice d'air de recirculation (34) est fermé ; et
- dans une position intermédiaire (C) entre la première position finale (A) et la seconde position finale (B), l'orifice d'entrée (14) est en communication à la fois avec l'orifice d'air de recirculation (34) et l'orifice d'air frais (32).

7. Module de conditionnement d'air (10) selon la revendication 6, dans lequel la position de la vanne d'entrée d'air (30) et variable autour de la position intermédiaire (C).
